# EUROPÄISCHE PATENTSCHRIFT

(11) **EP 3 884 761 B1**
(45) Veröffentlichungstag und Bekanntmachung des Hinweises auf die Patenterteilung: **25.11.2026**
(21) Anmeldenummer: 20212342.8
(22) Anmeldetag: 08.12.2020
(51) Int. Cl.: A01D 41/12, A01F 12/40

(54) **SELBSTFAHRENDER MÄHDRESCHER**
SELF-PROPELLED COMBINE HARVESTER
MOISSONNEUSE-BATTEUSE AUTONOME

(30) Priorität: 24.03.2020 DE 102020108089
(43) Veröffentlichungstag der Anmeldung: 29.09.2021
(73) Patentinhaber: CLAAS Selbstfahrende Erntemaschinen GmbH, 33428 Harsewinkel (DE)
(72) Erfinder: Beulke, Christian, 37589 Echte (DE); Heinze, Matthias, 33609 Bielefeld (DE); Amsbeck, Dieter, 33428 Harsewinkel (DE)
(74) Vertreter: CLAAS Gruppe

(56) Entgegenhaltungen:
- EP-A1- 0 958 727
- EP-A1- 1 461 994
- WO-A1-02/34029
- DE-A1- 102016 118 187

## Beschreibung

Die vorliegende Anmeldung betrifft einen selbstfahrenden Mähdrescher gemäß dem Oberbegriff von Anspruch 1.

Der Mähdrescher umfasst einen Strohhäcksler, mittels dessen ein von Pflanzenresten gebildeter Reststrom verarbeitbar ist. Dieser ist zuvor mittels einer Trennvorrichtung des Mähdreschers gebildet worden, wobei mittels der Trennvorrichtung, die insbesondere von einem Trennrotor oder einem Hordenschüttler gebildet sein kann, ein ihr zugeführter Pflanzenstrom in einen hauptsächlich von Körnern gebildeten Gutstrom sowie den von den Pflanzenresten gebildeten Reststrom trennbar ist. Weiterhin verfügt der Mähdrescher über eine Reinigungsvorrichtung, mittels der eine Reinigung des mittels der Trennvorrichtung abgetrennten Gutstroms von darin enthaltenen Restbestandteilen vorgenommen werden kann. Bei den Restbestandteilen handelt es sich insbesondere um Spreu. Der Reinigungsvorrichtung ist mindestens ein Spreuverteiler nachgeschaltet, mittels der die mittels der Reinigungsvorrichtung separierten Restbestandteile abgefördert werden können, insbesondere in Richtung mindestens eines Radialverteilers. Bei dem Spreuverteiler kann es sich insbesondere um ein Spreugebläse handeln, mittels dessen die Restbestandteile in eine rückwärtige Richtung des Mähdreschers ausgeblasen werden.

Dem Strohhäcksler ist mindestens ein Radialverteiler nachgeschaltet, mittels dessen der Reststrom, der mittels des Strohhäckslers verarbeitet wurde, übernommen und sodann aus dem Mähdrescher ausgeworfen werden kann. Der Radialverteiler weist einen Guteintrittsbereich auf, in den der mittels des Strohhäckslers verarbeitete Reststrom ausgehend von einem Übergabebereich übergebbar ist. Sowohl bezogen auf den Spreuverteiler als auch den Radialverteiler ist es bekannt, jeweils mehrere Arbeitseinrichtungen gemeinsam zu verwenden, um einen höheren Materialdurchsatz erreichen zu können. Somit kann der Spreuverteiler insbesondere mehre Wurfgebläse und der Radialverteiler mehrere Wurfeinheiten aufweisen. Zudem ist der Radialverteiler in aller Regel strömungstechnisch dem Spreuverteiler nachgeschaltet, sodass mittels des Radialverteilers die mittels des Spreuverteilers abgegebenen Restbestandteile übernommen und sodann gemeinsam mit dem Reststrom ausgeworfen werden.

Mähdrescher der vorstehend beschriebenen Art sind im Stand der Technik bereits bekannt. Hierzu wird beispielhaft auf die deutsche Patentanmeldung DE 10 2016 118 187 A1 hingewiesen. Diese beschreibt einen Mähdrescher, der in üblicher Weise eine Übergabe der Restbestandteile mittels des Spreuverteilers zu dem Radialverteiler vornimmt. Die Restbestandteile werden sodann gemeinsam mit dem Reststrom mittels des Radialverteilers aus dem Mähdrescher abgeworfen. Hierzu werden die Restbestandteile einem in Fahrtrichtung des Mähdreschers vorderen Bereich des Radialverteilers zugeführt, wobei in einem Gehäuse des Radialverteilers in dem vorderen Bereich eine Durchtrittsöffnung vorhanden ist, durch die hindurch die Restbestandteile in den Radialverteiler eintreten können. Innerhalb des Radialverteilers wird der von dem Strohhäcksler übernommene Reststrom mit den dem Radialverteiler zugeführten Restbestandteilen gemischt und beide werden gemeinsam an einem rückwärtigen Ende des Radialverteilers aus dem Mähdrescher ausgeworfen. Die EP 1 461 994 A1 offenbart einen Mähdrescher

Bei dem bekannten hat es sich als nachteilig herausgestellt, dass die Übergabe der Restbestandteile an den Radialverteiler nicht immer in zufriedenstellender Weise gelingt. Insbesondere kann es an einer Eintrittsöffnung des Radialverteilers zu Verwirbelungen kommen, sodass die Restbestandteile, die in die Eintrittsöffnung "eingeschossen" werden sollen, nicht eintreten können und stattdessen noch vor ihrem Eintritt in den Radialverteiler zu Boden fallen. Dies ist im Hinblick auf eine möglichst gleichförmige Ablage der Restbestandteile auf dem Feld nachteilig. Stattdessen werden die Restbestandteile verstärkt unmittelbar in einer Spur direkt hinter dem Mähdrescher abgelegt, da die Verteilung in eine Breitenrichtung bezogen auf den Mähdrescher, die ansonsten mittels des Radialverteilers vorgenommen wird, nicht stattfindet.

Der vorliegenden Erfindung liegt mithin die Aufgabe zugrunde, einen Mähdrescher bereitzustellen, mittels dessen eine bessere Verteilung nicht verwerteter Pflanzenreste auf dem Feld erreicht werden kann.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den zugehörigen Unteransprüchen.

Der erfindungsgemäße Mähdrescher ist durch mindestens eine in einem Boden eines Gehäuses angeordnete Durchtrittsöffnung gekennzeichnet. Diese ist dazu geeignet, dass durch diese hindurch die mittels des Spreuverteilers geförderten Restbestandteile zumindest teilweise in den Übergabebereich eintreten können. Mit anderen Worten ist mittels der Durchtrittsöffnung eine Möglichkeit geschaffen, die Restbestandteile ausgehend von dem Spreuverteiler zumindest teilweise stromaufwärts des mindestens einen Radialverteilers, nämlich in dem Übergabebereich, dem Reststrom zuzumischen. Auf diese Weise wird ein Mischstrom gebildet, der den Reststrom sowie die dem Reststrom zugemischten Restbestandteile enthält. Der Mischstrom wird sodann einheitlich an den Guteintrittsbereich des Radialverteilers übergeben. Mit anderen Worten wird im Unterschied zum Stand der Technik die Durchmischung von Reststrom und Restbestandteilen nicht erst in dem Radialverteiler, sondern bereits "vor" bzw. stromaufwärts des Radialverteilers vorgenommen, sodass in dem Moment, in dem die Restbestandteile und der Reststrom von dem Radialverteiler übernommen werden, selbige gemeinsam in Form des Mischstroms vorliegen.

Der erfindungsgemäße Mähdrescher hat viele Vorteile. Der wesentliche Effekt beruht darauf, dass die Zuführung der Restbestandteile zu dem Reststrom in einem Bereich vorgenommen wird, der im Vergleich zum Stand der Technik eine geringere Anfälligkeit für hinderliche Strömungsverhältnisse aufweist, die den Eintritt der Restbestandteile sowie deren Durchmischung mit dem Reststrom behindern könnten. Wie vorstehend dargelegt, ist eben dies im Stand der Technik regelmäßig zu beobachten, wobei die dort vorgenommene Übergabe der Restbestandteile an einem vorderen Bereich des Radialverteilers eine ebensolche Anfälligkeit für ungünstige Strömungsverhältnisse aufweist, sodass die Restbestandteile abgebremst werden und vor Eintritt in den Radialverteiler herunterfallen können. Mittels der erfindungsgemäßen Durchtrittsöffnung, durch die hindurch die Restbestandteile in den Übergabebereich einleitbar sind, wird eine unmittelbare Übergabe der Restbestandteile an den Radialverteiler vermieden, um den beschriebenen, potenziell ungünstigen Strömungsverhältnissen auszuweichen und einen zuverlässigen Eintritt der Restbestandteile in den Radialverteiler (in mit dem Reststrom gemischter Form) sicherzustellen. Hierzu treten die Restbestandteile in der beschriebenen Weise bereits stromaufwärts des Radialverteilers durch die Durchtrittsöffnung hindurch in den Übergabebereich ein. Die Anordnung der Durchtrittsöffnung in dem Boden des Gehäuses bietet dabei weiterhin den Vorteil, dass die Restbestandteile an einer möglichst tief liegenden Stelle des Gehäuses in selbiges eingebracht werden können, sodass sie ausgehend von dem Spreuverteiler in einem vergleichsweise flachen Winkel schräg nach oben gerichtet abgegeben werden können.

Das Gehäuse kann insbesondere das Gehäuse einer Baugruppe sein, die sowohl den Strohhäcksler als auch den Radialverteiler umfasst.

Den erfindungsgemäßen Mähdrescher weiter ausgestaltend ist der Radialverteiler dem Strohhäcksler untenseitig so zugeordnet, dass der aus dem Strohhäcksler austretende Reststrom unmittelbar an den Guteintrittsbereich des Radialverteilers übergebbar ist und dass die aus dem Spreuverteiler austretenden Restbestandteile in den Übergabebereich stromaufwärts des Radialverteilers abgebbar sind.

In einer vorteilhaften Ausgestaltung des erfindungsgemäßen Mähdreschers befindet sich die Durchtrittsöffnung unmittelbar stromaufwärts vor dem Radialverteiler. Mit anderen Worten schließt der Boden des Gehäuses vorzugsweise unmittelbar an den Radialverteiler an. Dies hat zur Folge, dass die Restbestandteile, die durch die Durchtrittsöffnung hindurch in den Übergabebereich eintreten, stromabwärts eines Häckselorgans des Strohhäckslers mit dem Reststrom vermischt werden. Mit anderen Worten ist der Übergabebereich bei dieser Ausführung stromabwärts des Häckselorgans angeordnet. Der Reststrom ist bei Ankunft im Übergabebereich entsprechend bereits mittels des Häckselorgans verarbeitet worden, bevor die Durchmischung mit den Restbestandteilen stattfindet. Diese Anordnung der Durchtrittsöffnung bietet den Vorteil, dass das Häckselorgan nicht zusätzlich zur Verarbeitung des Reststroms für die Verarbeitung der Restbestandteile sorgen muss, was aufgrund der ohnehin geringen Partikelgröße der Restbestandteile typischerweise nicht erforderlich ist.

Gleichwohl kann das Häckselorgan zumindest mittelbar auf die Restbestandteile einwirken, sodass deren Durchmischung mit dem Reststrom verbessert wird. Auf diese Weise kann der infolge der Vermischung von Restbestandteilen und Reststrom gebildete Mischstrom homogenisiert werden. Hierzu kann es von Vorteil sein, wenn die Durchtrittsöffnung in einem Abstand von maximal 50 cm, vorzugsweise maximal 40 cm, weiter vorzugsweise maximal 30 cm, von dem Häckselorgan des Strohhäckslers entfernt angeordnet ist.

Den erfindungsgemäßen Mähdrescher weiter ausgestaltend umfasst der Radialverteiler mindestens zwei Wurfeinheiten, die - in Fahrtrichtung des Mähdreschers betrachtet - nebeneinander angeordnet sind. Bei dieser Ausgestaltung weist der Boden des Gehäuses einen Vollabschnitt sowie sich einen an den Vollabschnitt anschließenden Verjüngungsabschnitt auf. Die Durchtrittsöffnung ist in dem Vollabschnitt angeordnet. Der Verjüngungsabschnitt erstreckt sich anschließend an einen Rand des Vollabschnitts bis zwischen die nebeneinander angeordneten Wurfeinheiten des Radialverteilers. Bei dieser Ausgestaltung geht vorzugsweise ein Boden des Strohhäckslers unmittelbar in den Übergabebereich und den Guteintrittsbereich des Radialverteilers über, sodass die Restbestandteile gewissermaßen an einem unteren Ende des Strohhäckslers in den Übergabebereich eintreten und sodann nach ihrer Durchmischung mit dem Reststrom unmittelbar an den Radialverteiler übergehen. Der Vollabschnitt sowie der Verjüngungsabschnitt des Bodens des Gehäuses sind vorteilhafterweise jeweils in sich plan ausgebildet, wobei der Vollabschnitt und der Verjüngungsabschnitt weiter vorzugsweise knickfrei aneinander anschließen, sodass der Boden vollständig eben ist. Die ist für einen möglichst reibungsarmen Transport des Mischstroms besonders vorteilhaft.

Sofern die Wurfeinheiten des Radialverteilers jeweils eine zylindrische Form aufweisen, ist der Verjüngungsabschnitt des Bodens vorzugsweise komplementär zu der Form der Wurfeinheiten ausgeformt und legt sich von außen an die Gehäuse der Wurfeinheiten an, wobei sich der Verjüngungsabschnitt des Bodens in eine von dem Vollabschnitt abgewandte Richtung sukzessive verjüngt. Eine entsprechende Ausgestaltung ist dem nachstehenden Ausführungsbeispiel zu entnehmen.

Den erfindungsgemäßen Mähdrescher weiter ausgestaltend ist eine Öffnungsebene der Durchtrittsöffnung gegenüber einer Horizontalen im Bereich zwischen 15° und 65°, vorzugsweise zwischen 20° und 40°, weiter vorzugsweise zwischen 25° und 35°, gegen die Horizontale geneigt. Diese Neigung ist im Hinblick auf einen möglichst einfachen Eintritt der Restbestandteile in den Übergabebereich vorteilhaft, wobei die Orientierung der Öffnungsebene vorteilhafterweise zumindest im Wesentlichen senkrecht zu einer Förderrichtung der Restbestandteile orientiert ist. Vorzugsweise ist die Förderrichtung der Restbestandteile vor Eintritt in den Übergabebereich gegenüber einer Orthogonalen, die senkrecht zu der Öffnungsebene der Durchtrittsöffnung orientiert ist, um maximal 30°, vorzugsweise maximal 25°, weiter vorzugsweise maximal 20°, geneigt orientiert.

Die in der beschriebenen Ausprägung schräg gegenüber der Horizontalen geneigte Orientierung der Öffnungsebene der Durchtrittsöffnung korrespondiert vorzugsweise mit einer entsprechenden Neigung des Bodens des Gehäuses, wobei die Neigung des Bodens eine Förderung des gebildeten Mischstroms in eine entsprechende Förderrichtung ermöglicht. Mithin bietet die beschriebene Ausgestaltung den Vorteil, dass die Förderrichtung des Mischstroms entsprechend gegenüber der Horizontalen geneigt orientiert ist, sodass der Mischstrom - von dem Strohhäcksler aus betrachtet - "schräg nach unten" gerichtet ist. Daraus ergibt sich, dass der Mischstrom - von dem Radialverteiler aus betrachtet - mittels des Radialverteilers von "schräg oben" übernommen werden kann. Somit ist insbesondere eine Übergabe des Mischstroms in horizontale Richtung an einen - in Fahrtrichtung des Mähdreschers betrachtet - vorderen Bereich des Radialverteilers nicht notwendig.

Bei dieser Ausgestaltung kann es vorteilhaft sein, wenn ein Gehäuse einer Wurfeinheit des Radialverteilers einen Innenraum der Wurfeinheit in einem vorderen Bereich des Radialverteilers vollständig einhaust. Der "vorderen Bereich" bezeichnet dabei denjenigen Bereich des Radialverteilers, der in Fahrtrichtung des Mähdreschers betrachtet vorne liegt. Die Ausbildung des Gehäuses der Wurfeinheit des Radialverteilers in der beschriebenen Weise hat den Vorteil, dass ein unbeabsichtigter Austritt von Teilen des von dem Radialverteiler übernommenen Mischstroms an einem vorderen Ende des Radialverteilers unterbunden ist. Dies ist im Vergleich beim Stand der Technik nicht gegeben, da dort prinzipbedingt zwecks Zutrittsmöglichkeit der Restbestandteile das Gehäuse der Wurfeinheit in dem vorderen Bereich geöffnet ist, um eine Eintrittsmöglichkeit für die Restbestandteile zu schaffen.

In einer bevorzugten Ausführungsform des erfindungsgemäßen Mähdreschers ist der Radialverteiler dem Strohhäcksler untenseitig zugeordnet. Auf diese Weise ist es besonders einfach, den von dem Reststrom und den Restbestandteilen gebildeten Mischstrom dem Radialverteiler "von oben" zuzuführen anstelle einer Zuführung "von hinten" gemäß dem Stand der Technik. Vorteilhafterweise erfolgt die Zuführung des Mischstroms "schräg von oben", wobei eine Förderrichtung des Mischstroms vorzugsweise in der vorstehend beschriebenen Weise gegenüber der Horizontalen geneigt orientiert ist.

Um den Eintritt der Restbestandteile in den Strohhäcksler zu erleichtern, kann es weiterhin besonders vorteilhaft sein, wenn der den Strohhäcksler durchlaufende Reststrom in dem Übergabebereich, in den die Restbestandteile eintreten, abgelenkt wird. Hierzu ist in einer weiterhin vorteilhaften Ausgestaltung des erfindungsgemäßen Mähdreschers an der Durchtrittsöffnung ein Leitelement angeordnet, das sich ausgehend von einem vorderen Rand der Durchtrittsöffnung erstreckt. Dabei ist das Leitelement, das insbesondere von einem Leitblech gebildet sein kann, vorzugsweise gegenüber einer Öffnungsebene der Durchtrittsöffnung geneigt ausgebildet, sodass es sich ausgehend von dem vorderen Rand der Durchtrittsöffnung in Richtung eines Innenraums des Strohhäckslers erstreckt. Der "vordere Rand" bezeichnet dabei denjenigen Rand der Durchtrittsöffnung, der in Förderrichtung des Reststroms betrachtet im Zuge der Strömung des Reststroms entlang der Durchtrittsöffnung von dem Reststrom zuerst erreicht wird. Das Leitelement hat mithin den technischen Effekt, dass zumindest ein entlang der Durchtrittsöffnung geführter Teil des Reststroms mittels des Leitelements von der Durchtrittsöffnung weg leitbar ist. Hierdurch kann in dem Übergabebereich ein Eintrittsvolumen geschaffen werden, das zumindest im Wesentlichen frei von Bestandteilen des Reststroms ist und mithin den Restbestandteilen, die durch die Durchtrittsöffnung hindurch eintreten, zur Verfügung steht.

Ferner ist ein weiteres Leitelement an der Durchtrittsöffnung denkbar, das eine von dem Strohhäcksler weg gerichtete Neigung aufweist und sich vorzugsweise an einem hinteren Rand der Durchtrittsöffnung befindet. Mittels eines solchen Leitelements können die Restbestandteile, die in aller Regel zwischen einem Auswurfkanal des Spreuverteilers und der Durchtrittsöffnung frei geführt sind, das heißt sich durch einen nicht-umbauten Raum bewegen, in die Durchtrittsöffnung geleitet werden. Hierdurch wird die Übernahme der Restbestandteile erleichtert.

In einer weiterhin vorteilhaften Ausgestaltung des erfindungsgemäßen Mähdreschers ist ein Auswurfkanal des mindestens einen Spreuverteilers in einem Bereich zwischen 5° und 45°, vorzugsweise zwischen 10° und 40° gegenüber der Horizontalen nach oben geneigt orientiert. Die Orientierung des Auswurfkanals bestimmt die Förderrichtung der durch den Auswurfkanal ausgeworfenen Restbestandteile, sodass die Neigung des Auswurfkanals gegenüber der Horizontalen in dem genannten Bereich gleichbedeutend zu einer Neigung der Förderrichtung der Restbestandteile ist, die den Spreuverteiler verlassen. Im Stand der Technik werden die Restbestandteile demgegenüber typischerweise zumindest im Wesentlichen in horizontale Richtung nach hinten ausgeworfen. Der davon abweichende Auswurf der Restbestandteile in eine nach oben geneigt Richtung bietet den Vorteil, dass die Restbestandteile höhenmäßig oberhalb des Radialverteilers in den Übergabebereich "eingeschossen" werden können, wobei sich der Radialverteiler insbesondere höhenmäßig auf einem Niveau mit dem Spreuverteiler befinden kann. Die Zuführung der Restbestandteile stromaufwärts des Radialverteilers ist mithin unter Anwendung des schräg nach oben geneigten Auswurfkanals besonders einfach umsetzbar.

In einer vorteilhaften Ausführungsform des erfindungsgemäßen Mähdreschers sind der Strohhäcksler und der mindestens eine Radialverteiler miteinander gekoppelt und bilden auf diese Weise gemeinsam eine zusammengehörige Baugruppe. Diese kann beispielsweise als Ganzes an einem Rahmen des Mähdreschers bewegbar ausgebildet sein. Insbesondere sind der Strohhäcksler und der Radialverteiler derart miteinander gekoppelt, dass ein Übertritt des Mischstroms von dem Strohhäcksler in den Guteintrittsbereich des Radialverteilers unmittelbar stattfinden kann.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine schematische Ansicht eines Spreuverteilers in Zusammenwirkung mit eines Strohhäckslers und eines Radialverteilers,
- Fig. 3:: wie Figur 2, jedoch in einem anderen Blickwinkel,
- Fig. 4:: Eine perspektivische Ansicht des Strohhäckslers gemäß Figur 2 mit einem nachgeschalteten Radialverteiler,
- Fig. 5:: wie Figur 2, jedoch in einem seitlichen Querschnitt,
- Fig. 6:: schematischer Querschnitt eines Strohhäckslers eines erfindungsgemäßen Mähdreschers und
- Fig. 7:: Ein Detail eines Bodenbereichs eines Gehäuses des Strohhäckslers gemäß Figur 2.

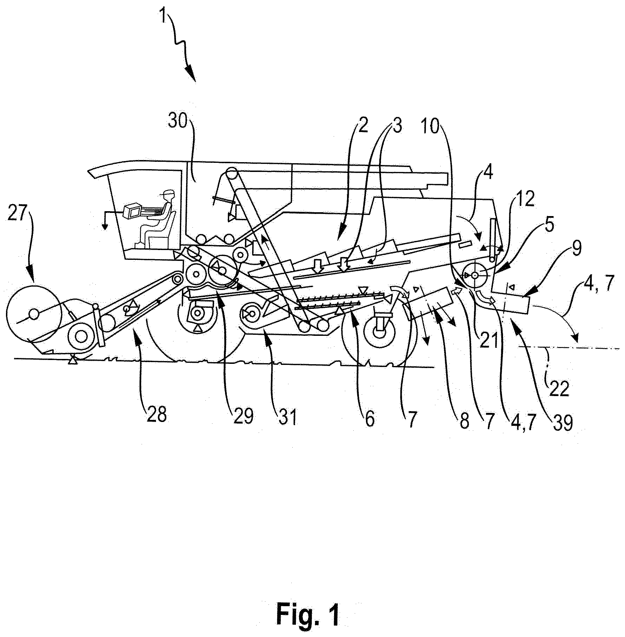

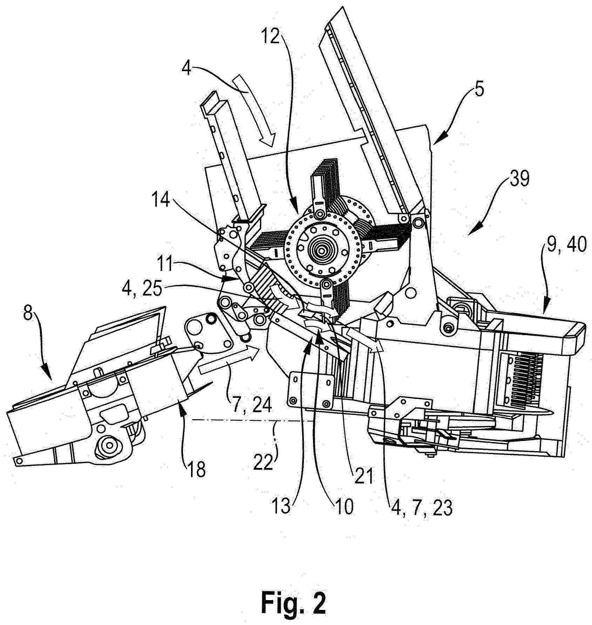

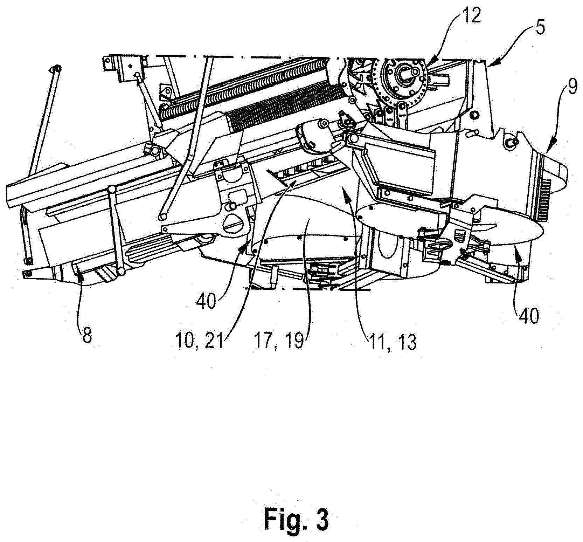

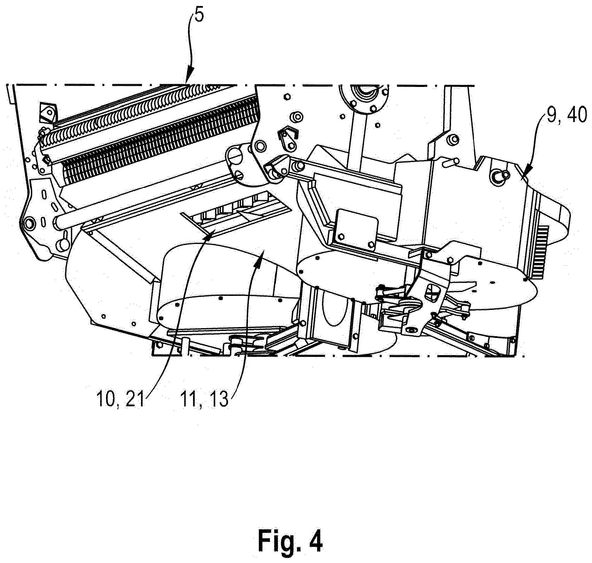

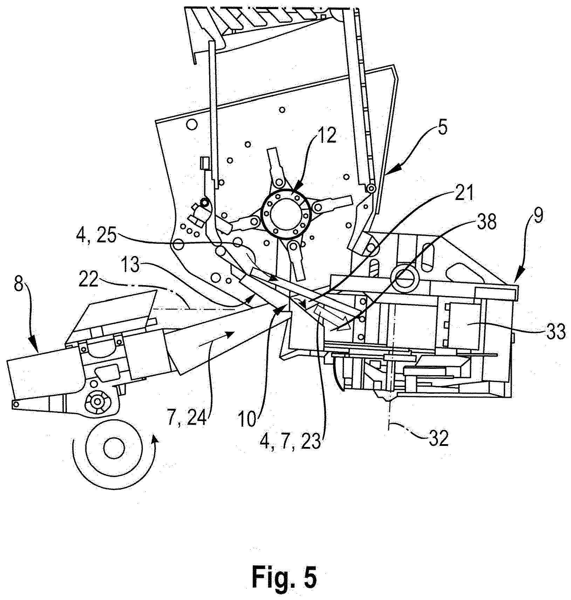

Ein Ausführungsbeispiel, das in den **Figuren 1 bis 7** gezeigt ist, umfasst einen erfindungsgemäßen Mähdrescher **1.** Dieser ist dazu geeignet, auf einem Feld aufstehende Pflanzen zu ernten und derart zu verarbeiten, dass Früchte der Pflanzen von Pflanzenresten getrennt und gesammelt werden. Die Pflanzenreste werden an einem hinteren Ende des Mähdreschers **1** abgelegt oder abgeworfen. Hierzu verfügt der Mähdrescher **1** an seinem vorderen Ende über eine Schneidvorrichtung **27,** mittels der die Pflanzen abschneidbar sind. Diese können sodann mittels eines Schrägförderers **28** einer Dreschvorrichtung **29** zugeführt werden, mittels der die Früchte von den Pflanzenresten ablösbar sind. Ein Großteil der Früchte wird unmittelbar an der Dreschvorrichtung **29** durch deren Dreschkorb hindurch abgeführt. Verbleibende Früchte werden ausgehend von der Dreschvorrichtung **29** gemeinsam mit den davon abgetrennten Pflanzenresten einer nachgeschalteten Trennvorrichtung **2** zugeführt, die in dem gezeigten Beispiel von einem Hordenschüttler gebildet ist. Mittels der Trennvorrichtung **2** werden die verbleibenden Früchte von den Pflanzenresten möglichst vollständig abgeschieden, sodass ein sogenannter "Restkornanteil", der gemeinsam mit den Pflanzenresten an dem hinteren Ende des Mähdreschers **1** ausgeworfen wird, möglichst gering ist. Die Trennvorrichtung **2** ist demgemäß dafür vorgesehen, aus dem von der Dreschvorrichtung **29** übernommenen Materialstrom einen zumindest hauptsächlich von den Früchten gebildeten Gutstrom **3** abzutrennen und diesen gesondert von einem verbleibenden, hauptsächlich von Pflanzenresten gebildeten Reststroms **4** abzuführen. Der Gutstrom **3** wird in dem gezeigten Beispiel ausgehend von der Trennvorrichtung **2** nach unten abgeführt und einer Reinigungsvorrichtung **6** zugeführt. Die Reinigungsvorrichtung **6** dient dazu, in dem Gutstrom **3** befindliche Restbestandteile **7**, die aufgrund ihrer Größe gemeinsam mit den Früchten von dem gesamten Materialstrom abgeschieden wurden, zu entfernen. Hierzu wirkt die Reinigungsvorrichtung 6 mit einem Gebläse **31** zusammen, das nach dem Prinzip der Windsichtung die (vergleichsweise leichten) Restbestandteile **7** von den (vergleichsweise schweren) Früchten trennt und zu einem hinteren Ende der Reinigungsvorrichtung **6** transportiert, an dem die Restbestandteile **7** einem nachgeschalteten Spreuverteiler **8** übergeben werden. Dieser verfügt hier über zwei Wurfgebläse, mittels derer die Restbestandteile **7** förderbar sind. Die Früchte werden schließlich in einen Korntank **30** gefördert und dort gesammelt.

Sowohl die mittels der Reinigungsvorrichtung **6** abgeschiedenen Restbestandteile **7** als auch die mittels der Trennvorrichtung **2** abgeschiedenen Pflanzenreste, die den Reststrom **4** bilden, werden schließlich aus dem Mähdrescher **1** ausgeworfen. Die Ausbringung soll dabei möglichst homogen sowie verteilt über eine Arbeitsbreite des Mähdreschers **1** hinweg stattfinden, damit die in den Pflanzenresten enthaltenen Nährstoffe möglichst gleichmäßig dem Boden zugeführt werden können. Die Ausbringung der Restbestandteile **7** sowie des Reststroms **4** erfolgt letztendlich gemeinsam mittels eines Radialverteilers **9**, der hier über zwei Wurfeinheiten **40** verfügt. Diese verfügen jeweils über eine Mehrzahl von Förderschaufeln **32,** die gemeinsam an einer Welle angeordnet sind. Die Welle ist um eine Rotationsachse **33** drehantreibbar. Die Förderschaufeln **32** können den Mischstrom **21** erfassen, beschleunigen und schließlich aus dem Mähdrescher **1** auswerfen. Bevor der Reststrom **4** dem Radialverteiler **9** zugeführt wird, wird er zunächst mittels eines der Trennvorrichtung **2** nachgeschalteten Strohhäckslers **5** verarbeitet. Dieser verfügt über ein Häckselorgan **12,** das eine drehantreibbare Welle mit daran angeordneten Schlagleisten aufweist. Der Reststrom **4** wird dem Strohhäcksler **5** derart zugeführt, dass der Reststrom **4** in einen Wirkungsbereich des Häckselorgans **12** gerät und im Zuge dessen mittels des Häckselorgans **12** gehäckselt wird. Ausgehend von dem Strohhäcksler **5** wird der verarbeitete Reststrom **4** dem Radialverteiler **9** zugeleitet.

In dem gezeigten Beispiel sind der Strohhäcksler **5** und der Radialverteiler 9 zu einer gemeinsamen Baugruppe **39** zusammengefasst, die ein Gehäuse **11** aufweist. In einem Boden **13** des Gehäuses **11** ist eine Durchtrittsöffnung **10** angeordnet, durch die hindurch die mittels der Reinigungsvorrichtung **6** separierten und mittels des Spreuverteilers **8** ausgeworfenen Restbestandteile **7** übernommen werden können. Die Restbestandteile **7** werden zunächst ausgehend von der Reinigungsvorrichtung **6** mittels des Spreuverteilers **8** übernommen. Der Spreuverteiler **8** umfasst in dem gezeigten Beispiel zwei Wurfgebläse, mittels derer die Restbestandteile **7** beschleunigt und aus einem Auswurfkanal **18** gerichtet ausgeblasen werden. Der Spreuverteiler **8** bzw. die Auswurfkanäle **18** von dessen Wurfgebläsen sind in dem gezeigten Beispiel schräg nach oben gegenüber einer Horizontalen **22** geneigt, wobei ein Winkel zwischen einer Förderrichtung **24** der Restbestandteile **7** und der Horizontalen **22** hier ca. 25° beträgt. Der Spreuverteiler **8** ist derart ausgerichtet, dass er gewissermaßen auf die Durchtrittsöffnung **10** zielt, sodass die Restbestandteile **7** in die Durchtrittsöffnung **10** "eingeschossen" werden. Mithin treten die Restbestandteile **7** in einen Übergabebereich **21** ein und treffen dort - stromabwärts eines Häckselorgans **12** des Strohhäckslers **5** - auf den verarbeiteten Reststrom **4** und werden dort mit letzterem gemischt, sodass ein Mischstrom **21** entsteht. Da der Übergabebereich **21** stromaufwärts des Radialverteilers **9** liegt, erfolgt die Zuleitung der Restbestandteile 7 zu dem Reststrom **4** gleichermaßen stromaufwärts des Radialverteiler **9.** Folglich werden die Restbestandteile **7** gemeinsam mit dem Reststrom **4,** nämlich in Form des gebildeten Mischstroms **21,** dem Radialverteiler **9** zugeführt. Da der Radialverteiler **9** in dem gezeigten Beispiel einer Unterseite des Strohhäckslers **5** zugeordnet sind, erfolgt die Übergabe des Mischstroms **21** in eine schräg nach unten gerichtete Förderrichtung **23.** Demzufolge wird der Mischstrom **21** - von dem Radialverteiler **9** aus betrachtet - von dem Radialverteiler **9** von "schräg oben" übernommen. Insbesondere findet die Übernahme des Mischstroms **21** nicht "von hinten" statt, wie dies im Stand der Technik üblich ist. Mittels des Radialverteilers **9** wird der Mischstrom **21** schließlich an dem hinteren Ende des Mähdreschers **1** ausgeworfen.

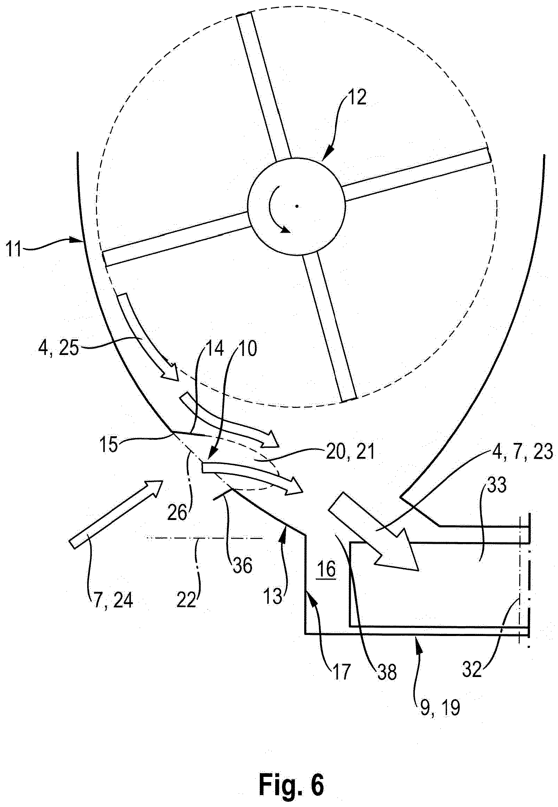

Wie beschrieben befindet sich die Durchtrittsöffnung **10** in dem Boden **13** des Gehäuses **11,** wobei der Boden **13** an einem unteren Ende des Strohhäckslers **5** stromabwärts des Häckselorgans **12** angeordnet ist. An einem in Strömungsrichtung **25** des Reststroms **4** betrachtet vorderen Rand **15** der Durchtrittsöffnung **10** wirkt selbige mit einem Leitelement **14** zusammen, das hier von einem Leitblech gebildet ist. Das Leitelement **14** erstreckt sich über eine gesamte Breite des vorderen Randes **15** und ist derart gegenüber einer Öffnungsebene **26** der Durchtrittsöffnung **11** geneigt, dass es sich in Richtung eines Innenraums des Strohhäckslers **5** erstreckt. Wie sich insbesondere anhand von **Figur 6** ergibt, bewirkt das Leitelement **14** eine lokale Ablenkung des Reststroms **4** im Bereich der Durchtrittsöffnung **10.** Diese Umlenkung hat den Effekt, dass in Übergabebereich **21** ein Eintrittsvolumen **20** geschaffen wird, in das die Restbestandteile **7** eintreten können. Das Eintrittsvolumen **20** ist in **Figur 6** schematisch mittels einer gestrichelten Linie veranschaulicht.

Ferner wirkt die Durchtrittsöffnung **10** mit einem zweiten Leitelement **36** zusammen, das sich ausgehend von einem hinteren Rand **37** der Durchtrittsöffnung **10** aus erstreckt. Das Leitelement **36** ist gleichermaßen gegenüber der Öffnungsebene **26** der Durchtrittsöffnung **10** geneigt, jedoch in entgegengesetzte Richtung zu dem vorstehend beschriebenen Leitelement **14.** Mithin erstreckt sich das Leitelement **36** in eine von dem Innenraum des Strohhäckslers **5** abgewandte Richtung. Hierdurch erleichtert es den Zutritt der mittels des Spreuverteilers **8** übergebenen Restbestandteile **7,** die mithilfe des Leitelements **36** in die Durchtrittsöffnung **10** geführt werden.

Nach Eintritt der Restbestandteile **7** in den Übergabebereich **21** liegen der Reststrom **4** und die Restbestandteile **7** fortan als Mischstrom **21** vor. Dieser strömt in eine Förderrichtung **23,** die zumindest im Wesentlichen parallel zu einer Förderrichtung **25** des Reststroms **4** orientiert ist. Die Förderrichtung **24** der Restbestandteile **7,** die diese vor Eintritt in den Übergabebereich **21** aufweisen, hat keinen Einfluss auf die Förderrichtung **23** des Mischstroms **21.** Mithin werden die Restbestandteile **7** im Zuge ihrer Zumischung zu dem Reststrom **4** umgelenkt und gewissermaßen von dem Reststrom **4** assimiliert, während die Förderrichtung **25** des Reststroms **4** mehr oder minder unverändert bleibt.

Wie vorstehend bereits dargelegt, ist die Förderrichtung **23** des Mischstroms **21** schräg nach unten geneigt orientiert, wobei die Förderrichtung **23** gegenüber der Horizontalen **22** in dem gezeigten Beispiel um ca. 35° nach unten geneigt ist. Diese Ausgestaltung in Kombination mit der Anordnung des Radialverteilers **9** untenseitig an dem Strohhäcksler **5** ermöglicht eine Zuführung des Mischstroms **21** in einen Guteintrittsbereich **38** des Radialverteilers **9** von einer Oberseite des Radialverteilers **9** her. Dies hat den besonderen Vorteil, dass die Gehäuse **19** der Wurfeinheiten **40** des Radialverteilers **9,** die einen jeweiligen Innenraum **16** räumlich einfassen, an ihrem - in Fahrtrichtung des Mähdreschers **1** betrachtet - vorderen Bereich **17** verschlossen sind. Hierdurch ist ein unbeabsichtigter Austritt von Teilen des Mischstroms **21** an einem vorderen Enden des Radialverteilers **9** unterbunden. Stattdessen tritt der Mischstrom **21** in gewünschter Weise vollständig an einem hinteren Ende des Radialverteilers **9** aus.

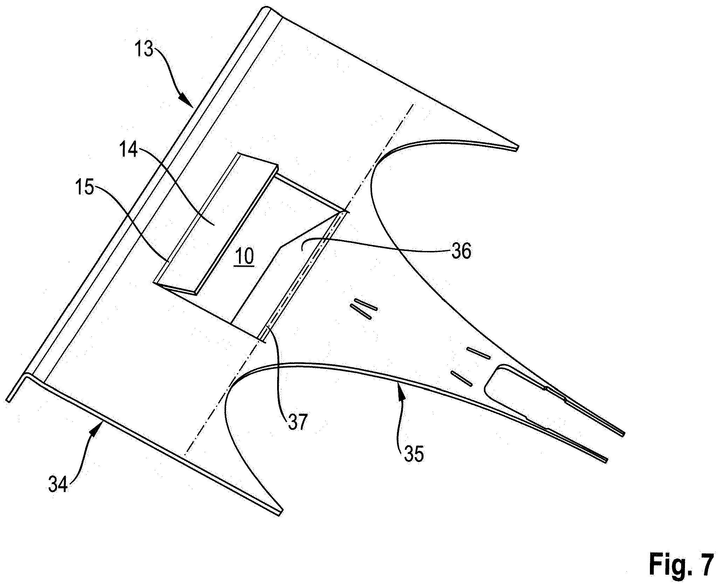

Der Boden **13** des Gehäuses **11** umfasst in dem gezeigten Beispiel einen Vollabschnitt **34** sowie einen sich randseitig daran anschließenden Verjüngungsabschnitt **35.** Dies ergibt sich besonders gut anhand von **Figur 7**. Die Durchtrittsöffnung **10** ist in dem Vollabschnitt **34** angeordnet. Der Verjüngungsabschnitt **35** weist zwei parabelförmige Einschnitte auf, die komplementär den Gehäusen **19** der Wurfeinheiten **40** ausgebildet sind. Der Boden **13** ist hierdurch dazu geeignet, sich in Richtung des Radialverteilers **9** bis zwischen die Wurfeinheiten **40** zu erstrecken und auf diese Weise eine unmittelbare Übergabe des Mischstroms **21** an den Guteintrittsbereich **38** des Radialverteilers **9** zu bewerkstelligen.

### Bezugszeichenliste

- 1: Mähdrescher
- 2: Trennvorrichtung
- 3: Gutstrom
- 4: Reststrom
- 5: Strohhäcksler
- 6: Reinigungsvorrichtung
- 7: Restbestandteil
- 8: Spreuverteiler
- 9: Radialverteiler
- 10: Durchtrittsöffnung
- 11: Gehäuse
- 12: Häckselorgan
- 13: Boden
- 14: Leitelement
- 15: Rand
- 16: Innenraum
- 17: Bereich
- 18: Auswurfkanal
- 19: Gehäuse
- 20: Eintrittsvolumen
- 21: Übergabebereich
- 22: Horizontale
- 23: Förderrichtung
- 24: Förderrichtung
- 25: Förderrichtung
- 26: Öffnungsebene
- 27: Schneidvorrichtung
- 28: Schrägförderer
- 29: Dreschvorrichtung
- 30: Korntank
- 31: Gebläse
- 32: Rotationsachse
- 33: Förderschaufel
- 34: Vollabschnitt
- 35: Verjüngungsabschnitt
- 36: Leitelement
- 37: Rand
- 38: Guteintrittsbereich
- 39: Baugruppe
- 40: Wurfeinheit

## Patentansprüche

1. Selbstfahrender Mähdrescher (1), umfassend
- einen Strohhäcksler (5) zur Verarbeitung eines von Pflanzenresten gebildeten Reststroms (4),
- eine Reinigungsvorrichtung (6) zur Reinigung eines hauptsächlich von Körnern gebildeten Gutstroms (3) von darin enthaltenen Restbestandteilen (7),
- einen Spreuverteiler (8) sowie
- einen Radialverteiler (9),
wobei mittels des Spreuverteilers (8) die mittels der Reinigungsvorrichtung (6) aus dem Gutstrom (3) separierten Restbestandteile (7) abförderbar sind,
wobei der Radialverteiler (9) einen Guteintrittsbereich (38) aufweist, in den der mittels des Strohhäckslers (5) verarbeitete Reststrom (4) ausgehend von einem Übergabebereich (21) übergebbar ist,
wobei der Reststrom (4) mittels des Radialverteilers (9) aus dem Mähdrescher (1) auswerfbar ist,
**gekennzeichnet durch**
mindestens eine in einem Boden (13) eines Gehäuses (11) angeordnete Durchtrittsöffnung (10), durch die hindurch die mittels des Spreuverteilers (8) geförderten Restbestandteile (7) zumindest teilweise in den Übergabebereich (5) eintreten können, wobei sich der Boden (13) unmittelbar an den Radialverteiler (9) anschließt, wobei der Übergabebereich (5) stromabwärts des Strohhäckslers (5) angeordnet ist.

2. Mähdrescher (1) nach einem der vorhergehenden Ansprüche, **dadurch gekennzeichnet, dass** der Radialverteiler (9) dem Strohhäcksler (5) untenseitig so zugeordnet ist, dass der aus dem Strohhäcksler (5) austretende Reststrom (4) unmittelbar an den Guteintrittsbereich (38) des Radialverteilers (9) übergebbar ist und dass die aus dem Spreuverteiler (8) austretenden Restbestandteile (7) in den Übergabebereich (21) stromaufwärts des Radialverteilers (7) abgebbar sind.

3. Mähdrescher (1) nach einem der vorhergehenden Ansprüche, **dadurch gekennzeichnet, dass** der Radialverteiler (9) zwei nebeneinander angeordnete Wurfeinheiten (40) aufweist, wobei der Boden (13) des Gehäuses (11) einen Vollabschnitt (34), in dem die Durchtrittsöffnung (10) angeordnet ist, und einen an den Vollabschnitt (34) angeschlossenen Verjüngungsabschnitt (35) aufweist, der sich bis zwischen die Wurfeinheiten (40) erstreckt.

4. Mähdrescher (1) nach Anspruch 3, **dadurch gekennzeichnet, dass** die Wurfeinheiten (40) des Radialverteilers (9) jeweils eine zylindrische Form aufweisen, wobei sich der Verjüngungsabschnitt (35) des Bodens (13) komplementär zu der Form der Wurfeinheiten (40) in eine von dem Vollabschnitt (34) abgewandte Richtung sukzessive verjüngt.

5. Mähdrescher (1) nach einem der vorhergehenden Ansprüche, **dadurch gekennzeichnet, dass** eine Öffnungsebene (26) der Durchtrittsöffnung (10) gegenüber einer Horizontalen (22) im Bereich zwischen 15° und 65°, vorzugsweise zwischen 20° und 40°, weiter vorzugsweise zwischen 25° und 35°, gegen die Horizontale (22) geneigt ist.

6. Mähdrescher (1) nach einem der vorhergehenden Ansprüche, **dadurch gekennzeichnet, dass** an der Durchtrittsöffnung (10) ein Leitelement (14) angeordnet ist, das sich ausgehend von einem - in Förderrichtung (25) des Reststroms (4) betrachtet - vorderen Rand (15) der Durchtrittsöffnung (10) gegenüber einer Öffnungsebene (26) der Durchtrittsöffnung (10) geneigt erstreckt, sodass mittels des Leitelements (14) ein an der Durchtrittsöffnung (10) entlanggeführter Teil des Reststroms (4) ablenkbar und auf diese Weise von der Durchtrittsöffnung (10) weg leitbar ist.

7. Mähdrescher (1) nach einem der vorhergehenden Ansprüche, **dadurch gekennzeichnet, dass** die Durchtrittsöffnung (10) in einem Abstand von maximal 50 cm, vorzugsweise maximal 40 cm, weiter vorzugsweise maximal 30 cm, von einem Häckselorgan (12) des Strohhäckslers (5) angeordnet ist.

8. Mähdrescher (1) nach einem der vorhergehenden Ansprüche, **dadurch gekennzeichnet, dass** der Radialverteiler (9) dem Strohhäcksler (5) untenseitig zugeordnet ist.

9. Mähdrescher (1) nach einem der vorhergehenden Ansprüche, **dadurch gekennzeichnet, dass** ein Gehäuse (19) einer Wurfeinheit (40) des Radialverteilers (9) einen Innenraum (16) der Wurfeinheit (40) derart einhaust, dass der Radialverteiler (9) an einem - in Fahrtrichtung des Mähdreschers (1) betrachtet - vorderen Bereich (17) verschlossen ist.

10. Mähdrescher (1) nach einem der vorhergehenden Ansprüche, **dadurch gekennzeichnet, dass** der Strohhäcksler (5) und der Radialverteiler (9) miteinander gekoppelt sind und eine gemeinsame Baugruppe bilden.

11. Mähdrescher (1) nach einem der vorhergehenden Ansprüche, **dadurch gekennzeichnet, dass** ein Auswurfkanal (18) des Spreuverteilers (8) gegenüber einer Horizontalen (19) nach oben geneigt orientiert ist, vorzugsweise um einen Winkel zwischen 5° und 45°, weiter vorzugsweise zwischen 10° und 40°.

## Claims

1. Self-propelled combine harvester (1) comprising
- a straw chopper (5) for processing a residue stream (4) formed by plant residues,
- a cleaning device (6) for cleaning a material stream (3), formed mainly by grains, of residual constituents (7) present therein,
- a chaff distributor (8), and
- a radial distributor (9),
wherein the residual constituents (7) separated from the material stream (3) by means of the cleaning device (6) are dischargeable by means of the chaff distributor (8), wherein the radial distributor (9) has a material entry region (38) into which the residue stream (4) processed by means of the straw chopper (5) is transferable from a transfer region (21),
wherein the residue stream (4) is ejectable from the combine harvester (1) by means of the radial distributor (9),
**characterized by**
at least one passage opening (10) which is arranged in a base (13) of a housing (11) and through which the residual constituents (7) conveyed by means of the chaff distributor (8) can at least partially enter the transfer region (5), wherein the base (13) directly adjoins the radial distributor (9), wherein the transfer region (5) is arranged downstream of the straw chopper (5).

2. Combine harvester (1) according to one of the preceding claims, **characterized in that** the radial distributor (9) is assigned to the straw chopper (5) at the bottom side in such a way that the residue stream (4) exiting the straw chopper (5) is directly transferable to the material entry region (38) of the radial distributor (9), and **in that** the residual constituents (7) exiting the chaff distributor (8) are deliverable into the transfer region (21) upstream of the radial distributor (7).

3. Combine harvester (1) according to one of the preceding claims, **characterized in that** the radial distributor (9) has two ejector units (40) arranged next to one another, wherein the base (13) of the housing (11) has a full portion (34), in which the passage opening (10) is arranged, and has a tapering portion (35), which adjoins the full portion (34) and extends as far as between the ejector units (40).

4. Combine harvester (1) according to Claim 3, **characterized in that** the ejector units (40) of the radial distributor (9) each have a cylindrical shape, wherein the tapering portion (35) of the base (13) tapers gradually in a direction away from the full portion (34) in a manner complementary to the shape of the ejector units (40).

5. Combine harvester (1) according to one of the preceding claims, **characterized in that**, in relation to a horizontal (22), an opening plane (26) of the passage opening (10) is at an angle in the range between 15° and 65°, preferably between 20° and 40°, further preferably between 25° and 35°, with respect to the horizontal (22).

6. Combine harvester (1) according to one of the preceding claims, **characterized in that**, on the passage opening (10), there is arranged a guide element (14) which, proceeding from a front edge (15) of the passage opening (10) as viewed in the conveying direction (25) of the residue stream (4), extends at an angle in relation to an opening plane (26) of the passage opening (10) so that, by means of the guide element (14), a part of the residue stream (4) conducted along the passage opening (10) is divertable and, in this way, guidable away from the passage opening (10).

7. Combine harvester (1) according to one of the preceding claims, **characterized in that** the passage opening (10) is arranged at a distance of at most 50 cm, preferably at most 40 cm, further preferably at most 30 cm, from a chopper member (12) of the straw chopper (5).

8. Combine harvester (1) according to one of the preceding claims, **characterized in that** the radial distributor (9) is assigned to the straw chopper (5) at the bottom side.

9. Combine harvester (1) according to one of the preceding claims, **characterized in that** a housing (19) of an ejector unit (40) of the radial distributor (9) accommodates an interior space (16) of the ejector unit (40) in such a way that the radial distributor (9) is closed off at a front region (17), as viewed in the direction of travel of the combine harvester (1).

10. Combine harvester (1) according to one of the preceding claims, **characterized in that** the straw chopper (5) and the radial distributor (9) are coupled to one another and form a common assembly.

11. Combine harvester (1) according to one of the preceding claims, **characterized in that**, in relation to a horizontal (19), an ejection channel (18) of the chaff distributor (8) is oriented so as to be upwardly inclined, preferably at an angle between 5° and 45°, further preferably between 10° and 40°.

## Revendications

1. Moissonneuse-batteuse automotrice (1), comprenant
- un broyeur de paille (5) destiné à traiter un flux de résidus (4) constitué de résidus végétaux,
- un dispositif de nettoyage (6) destiné à débarrasser un flux de matière (3) constitué principalement de grains des constituants résiduels (7) qu'il contient,
- un répartiteur de menue paille (8), ainsi que
- un répartiteur radial (9),
dans laquelle les constituants résiduels (7) séparés du flux de matière (3) au moyen du dispositif de nettoyage (6) peuvent être évacués au moyen du répartiteur de menue paille (8),
dans laquelle le répartiteur radial (9) présente une zone d'entrée de matière (38), dans laquelle le flux de résidus (4) traité au moyen du broyeur de paille (5) peut être transféré depuis une zone de transfert (21),
dans laquelle le flux de résidus (4) peut être éjecté hors de la moissonneuse-batteuse (1) au moyen du répartiteur radial (9),
**caractérisée par**
au moins une ouverture de passage (10) ménagée dans un fond (13) d'un boîtier (11), à travers laquelle les constituants résiduels (7) acheminés au moyen du répartiteur de menue paille (8) peuvent pénétrer au moins partiellement dans la zone de transfert (5), dans laquelle le fond (13) est directement adjacent au répartiteur radial (9), dans laquelle la zone de transfert (5) est disposée en aval du broyeur de paille (5).

2. Moissonneuse-batteuse (1) selon l'une des revendications précédentes, **caractérisée en ce que** le répartiteur radial (9) est disposé sous le broyeur de paille (5) de telle sorte que le flux de résidus (4) sortant du broyeur de paille (5) puisse être transféré directement à la zone d'entrée de matière (38) du répartiteur radial (9) et que les constituants résiduels (7) sortant du répartiteur de menue paille (8) puissent être délivrés dans la zone de transfert (21) en amont du répartiteur radial (7).

3. Moissonneuse-batteuse (1) selon l'une des revendications précédentes, **caractérisée en ce que** le répartiteur radial (9) présente deux unités de projection (40) disposées côte à côte, dans laquelle le fond (13) du boîtier (11) présente une section pleine (34), dans laquelle est ménagée l'ouverture de passage (10), et une section de rétrécissement (35) raccordée à la section pleine (34), qui s'étend jusque dans l'espace entre les unités de projection (40).

4. Moissonneuse-batteuse (1) selon la revendication 3, **caractérisée en ce que** les unités de projection (40) du répartiteur radial (9) présentent chacune une forme cylindrique, dans laquelle la section de rétrécissement (35) du fond (13) se rétrécit progressivement, de manière complémentaire à la forme des unités de projection (40), dans une direction opposée à la section pleine (34).

5. Moissonneuse-batteuse (1) selon l'une des revendications précédentes, **caractérisée en ce qu'**un plan d'ouverture (26) de l'ouverture de passage (10) est incliné par rapport à une horizontale (22) d'un angle compris entre 15° et 65°, de préférence entre 20° et 40°, plus préférentiellement entre 25° et 35°, par rapport à une horizontale (22).

6. Moissonneuse-batteuse (1) selon l'une des revendications précédentes, **caractérisée en ce qu'**un élément de guidage (14) est disposé au niveau de l'ouverture de passage (10) et s'étend, à partir d'un bord avant (15) de l'ouverture de passage (10), considéré dans la direction d'acheminement (25) du flux de résidus (4), de manière inclinée par rapport à un plan d'ouverture (26) de l'ouverture de passage (10), de sorte qu'une partie du flux de résidus (4) acheminée le long de l'ouverture de passage (10) puisse être déviée au moyen de l'élément de guidage (14) et ainsi guidée à l'écart de l'ouverture de passage (10).

7. Moissonneuse-batteuse (1) selon l'une quelconque des revendications précédentes, **caractérisée en ce que** l'ouverture de passage (10) est disposée à une distance maximale de 50 cm, de préférence maximale de 40 cm, plus préférentiellement maximale de 30 cm, d'un organe de coupe (12) du broyeur de paille (5).

8. Moissonneuse-batteuse (1) selon l'une des revendications précédentes, **caractérisée en ce que** le répartiteur radial (9) est disposé sous le broyeur de paille (5).

9. Moissonneuse-batteuse (1) selon l'une des revendications précédentes, **caractérisée en ce qu'**un boîtier (19) d'une unité de projection (40) du répartiteur radial (9) entoure un espace intérieur (16) de l'unité de projection (40) de telle sorte que le répartiteur radial (9) soit fermé dans une zone avant (17), considérée dans le sens de déplacement de la moissonneuse-batteuse (1).

10. Moissonneuse-batteuse (1) selon l'une des revendications précédentes, **caractérisée en ce que** le broyeur de paille (5) et le répartiteur radial (9) sont couplés l'un à l'autre et forment un ensemble commun.

11. Moissonneuse-batteuse (1) selon l'une des revendications précédentes, **caractérisée en ce qu'**un canal d'éjection (18) du répartiteur de menue paille (8) est orienté de manière inclinée vers le haut par rapport à une horizontale (19), de préférence d'un angle compris entre 5° et 45°, plus préférentiellement entre 10° et 40°.
